# EUROPEAN PATENT APPLICATION

(11) **EP 4 723 725 A1**
(43) Date of publication of application: **08.04.2026**
(21) Application number: 25205812.8
(22) Date of filing: 30.09.2025
(51) Int. Cl.: H04W 24/10, H04W 36/00

(54) **LOWER-LAYER TRIGGERED MOBILITY (LTM) EVENT EVALUATION**

(30) Priority: 02.10.2024 US 202463702489 P
(71) Applicant: Nokia Technologies Oy, 02610 Espoo (FI)
(72) Inventor: KOSKELA, Timo, 90670 Oulu (FI); GOYAL, Sanjay, New Jersey, 07834 (US)
(74) Representative: Script Intellectual Property LLP

(57) **Abstract**

A method performed by a user equipment (UE) includes performing layer 1 (L1) measurements of reference signals of one or more candidate cells for a cell switch of the UE. The method includes performing an evaluation of one or more reporting events for a maximum number of the reference signals based on the L1 measurements. Respective reference signals of the maximum number of the reference signals are selected based on a relative priority among the one or more reporting events, the L1 measurements, the reference signals, or the one or more candidate cells. And the method includes making a determination whether a reporting event of the one or more reporting events is fulfilled based on the evaluation.

## Description

### TECHNOLOGICAL FIELD

The present disclosure relates generally to telecommunications and, in particular, to layer 1 measurement reporting in a telecommunications system.

### BACKGROUND

A telecommunications system can be seen as a facility that enables communication sessions between two or more entities such as user terminals, base stations and/or other nodes by providing carriers between the various entities involved in the communications path. A telecommunications system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless telecommunications system, at least a part of a communication session between at least two stations occurs over a wireless link. Examples of wireless telecommunications systems comprise public land mobile networks (PLMN), satellite based communication systems and different wireless local networks, for example wireless local area networks (WLAN). Some wireless systems can be divided into cells, and are therefore often referred to as cellular systems.

A user can access the telecommunications system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The telecommunications system and associated devices typically operate in accordance with a given standard or specification which sets out what the various entities associated with the communication system are permitted to do and how operations should be achieved. Communication protocols and/or parameters which shall be used for connection of the various entities are also typically defined. One example of a telecommunications system is the Universal Mobile Telecommunications System (UMTS). Other examples of telecommunications systems are Long-Term Evolution (LTE), LTE Advanced and the so-called 5G or New Radio (NR) networks. NR is being standardized by the 3rd Generation Partnership Project (3GPP).

### BRIEF SUMMARY

Example implementations of the present disclosure are directed to telecommunications and, in particular, to layer 1 measurement reporting in a telecommunications system. The present disclosure includes, without limitation, the following example implementations.

Some example implementations provide an apparatus apparatus comprising: at least one memory configured to store instructions; and at least one processing circuitry configured to access the at least one memory, and execute the instructions to cause the apparatus to at least: perform layer 1 (L1) measurements of reference signals of one or more candidate cells for a cell switch of a user equipment (UE); perform an evaluation of one or more reporting events for the reference signals based on the L1 measurements, wherein the evaluation is limited to the L1 measurements of at least one of a minimum number or a maximum number of the reference signals indicated by a capability of the UE sent to the serving cell, or by a configuration of the UE received from the serving cell; and make a determination whether a reporting event of the one or more reporting events is fulfilled based on the evaluation.

Some example implementations provide a method performed by a user equipment (UE), the method comprising: performing layer 1 (L1) measurements of reference signals of one or more candidate cells for a cell switch of the UE; performing an evaluation of one or more reporting events for the reference signals based on the L1 measurements, wherein the evaluation is limited to the L1 measurements of at least one of a minimum number or a maximum number of the reference signals indicated by a capability of the UE sent to the serving cell, or by a configuration of the UE received from the serving cell; and making a determination whether a reporting event of the one or more reporting events is fulfilled based on the evaluation.

Some example implementations provide an apparatus comprising: at least one memory configured to store instructions; and at least one processing circuitry configured to access the at least one memory, and execute the instructions to cause the apparatus to at least: perform layer 1 (L1) measurements of reference signals of one or more candidate cells for a cell switch of a user equipment (UE); perform an evaluation of one or more reporting events for a maximum number of the reference signals based on the L1 measurements, wherein respective reference signals of the maximum number of the reference signals are selected based on a relative priority among the one or more reporting events, the L1 measurements, the reference signals, or the one or more candidate cells; and make a determination whether a reporting event of the one or more reporting events is fulfilled based on the evaluation.

Some example implementations provide a method performed by a user equipment (UE), the method comprising: performing layer 1 (L1) measurements of reference signals of one or more candidate cells for a cell switch of the UE; performing an evaluation of one or more reporting events for a maximum number of the reference signals based on the L1 measurements, wherein respective reference signals of the maximum number of the reference signals are selected based on a relative priority among the one or more reporting events, the L1 measurements, the reference signals, or the one or more candidate cells; and making a determination whether a reporting event of the one or more reporting events is fulfilled based on the evaluation.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. The present disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope or spirit of the disclosure in any way. Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a telecommunications system that includes one or more public land mobile networks (PLMNs) coupled to one or more external data networks, according to some example implementations of the present disclosure;
FIG. 2 illustrates a 5G deployment of a PLMN, according to some example implementations;
FIG. 3 is a signaling chart for a L1/L2-triggered mobility, also known as lower-layer triggered mobility (LTM) procedure, according to some example implementations;
FIGS. 4A and 4B illustrate a signaling chart for an LTM procedure in a CU-DU split architecture, according to some example implementations;
FIG. 5 illustrates steps of a procedure for evaluation of one or more L1 measurement reporting events, according to some example implementations;
FIG. 6 illustrates a signaling chart of a procedure event-based reporting of L1 measurements, according to some example implementations;
FIGS. 7A, 7B, 7C, 7D and 7E are flowcharts illustrating various steps in a method performed by a user equipment (UE), according to various example implementations;
FIGS. 8A, 8B, 8C and 8D are flowcharts illustrating various steps in a method performed by a UE, according to various example implementations; and
FIG. 9 illustrates an apparatus according to some example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably. The term "network" may refer to a group of interconnected computers including clients and servers; and within a network, these computers may be interconnected directly or indirectly by various means including via one or more switches, routers, gateways, access points or the like.

Reference may be made herein to terms specific to a particular system, architecture or the like, but it should be understood that example implementations of the present disclosure may be equally applicable to any of a number of systems, architectures and the like. For example, reference may be made to 3GPP technologies such as Global System for Mobile Communications (GSM), UMTS, LTE, LTE Advanced, 5G NR, 5G Advanced and 6G; however, it should be understood that example implementations of the present disclosure may be equally applicable to non-3GPP technologies such as IEEE 802, Bluetooth and Bluetooth Low Energy.

Further, as used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); or (c) hardware circuit(s) and/or processor(s), such as a microprocessor(s) or a portion of a microprocessor(s), that requires software (e.g., firmware) for operation, but the software may not be present when it is not needed for operation.

The above definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

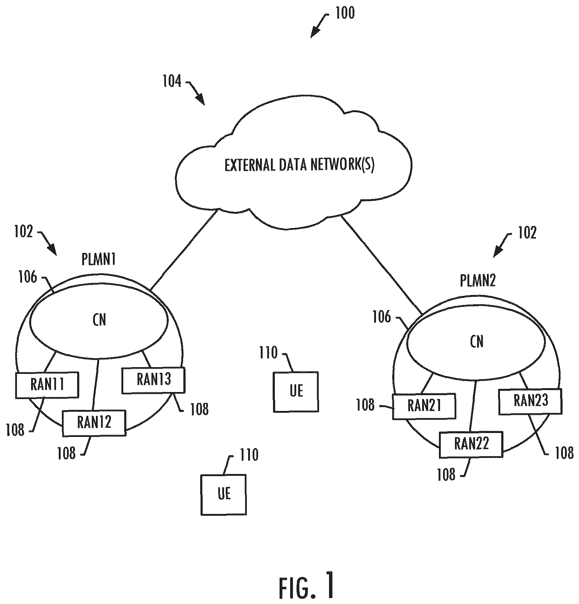

FIG. 1 illustrates a telecommunications system **100** according to various example implementations of the present disclosure. The telecommunications system generally includes one or more telecommunications networks. As shown, for example, the system includes one or more PLMNs **102** coupled to one or more other external data networks **104** - notably including a wide area network (WAN) such as the Internet. Each of the PLMNs includes a core network (CN) **106** backbone such as the Evolved Packet Core (EPC) of LTE, the 5G core network (5GC) or the like; and each of the core networks and the Internet are coupled to one or more RANs **108,** air interfaces or the like that implement one or more radio access technologies (RATs). As used herein, a "network device" refers to any suitable device at a network side of a telecommunications network. Examples of suitable network devices are described in greater detail below.

In addition, the system includes one or more radio units that may be varyingly known as user equipment (UE) **110,** terminal device, terminal equipment, mobile station or the like. The UE is generally a device configured to communicate with a network device or a further UE in a telecommunications network. The UE may be a portable computer (e.g., laptop, notebook, tablet computer), mobile phone (e.g., cell phone, smartphone), wearable computer (e.g., smartwatch), or the like. In other examples, the UE may be an Internet of things (IoT) device, an industrial IoT (IIoT device), a vehicle equipped with a vehicle-to-everything (V2X) communication technology, or the like. In some examples, as referenced by 3GPP, the UE may be a narrowband IoT (NB-IoT) device, an enhanced machine-type communication (eMTC) device, a reduced capability (RedCap) device, an ambient IoT device, or the like.

In operation, these UEs **110** may be configured to connect to one or more of the RANs **108** according to their particular radio access technologies to thereby access a particular CN **106** of a PLMN **102,** or to access one or more of the external data networks **104** (e.g., the Internet). The external data network may be configured to provide Internet access, operator services, 3rd party services, etc. For example, the International Telecommunication Union (ITU) has classified 5G mobile network services into three categories: enhanced mobile broadband (eMBB), ultra-reliable and low-latency communications (URLLC), and massive machine type communications (mMTC) or massive internet of things (MIoT).

Examples of radio access technologies include 3GPP radio access technologies such as GSM, UMTS, LTE, LTE Advanced, 5G NR, 5G Advanced, and 6G. Other examples of radio access technologies include IEEE 802 technologies such as IEEE 802.11 (Wi-Fi), IEEE 802.15 (including 802.15.1 (WPAN/Bluetooth), 802.15.4 (Zigbee) and 802.15.6 (WBAN)), Bluetooth, Bluetooth Low Energy (BLE), ultra wideband (UWB), and the like. Generally, a radio access technology may refer to any 2G, 3G, 4G, 5G, 6G or higher generation mobile communication technology and their different versions, as well as to any other wireless radio access technology that may be arranged to interwork with such a mobile communication technology to provide access to the CN **106** of a mobile network operator (MNO).

In various examples, a RAN **108** may be configured as one or more macrocells, microcells, picocells, femtocells or the like. The RAN may generally include one or more radio access nodes that are configured to interact with UEs **110.** In various examples, a radio access node may be referred to as a base station (BS), access point (AP), base transceiver station (BTS), Node B (NB), evolved NB (eNB), macro BS, NB (MNB) or eNB (MeNB), home BS, NB (HNB) or eNB (HeNB), next generation NB (gNB), enhanced gNB (en-gNB), next generation eNB (ng-eNB), or the like. The RAN may include some type of network controlling/governing entity responsible for control of the radio access nodes. The network controlling/governing entity and radio access node may be separate or integrated into a single apparatus. The network controlling/governing entity may include processing circuity configured to carry out various management functions, etc. The processing circuity may be associated with a memory, computer-readable storage medium or database for maintaining information required in the management functions.

A RAN **108** may be centralized or distributed. In various examples, components of a RAN may be interconnected by Ethernet, Gigabit Ethernet, Asynchronous Transfer Mode (ATM), optical fiber, dark fiber, passive wavelength division multiplexing (WDM), WDM passive optical network (WDM-PON), optical transport network (OTN), time sensitive networking (TSN) and/or any other data link layer network, possibly including radio links. The RAN may be connected to a CN **106** through one or more gateways, network functions or the like.

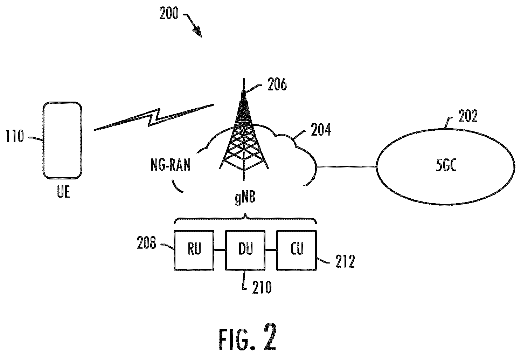

As will be appreciated, a PLMN **102** may be deployed in a number of different manners. In a 4G LTE deployment, the EPC is the CN **106,** and the evolved UMTS terrestrial radio access network (E-UTRAN) is the RAN **108;** and the E-UTRAN includes one or more eNBs (radio access nodes) configured to connect UEs **110** to the E-UTRAN to thereby access the EPC. As shown in FIG. 2, in a 5G deployment **200,** the 5GC **202** is the CN, and the next generation (NG) radio access network (NG-RAN) **204** is the RAN; and the NG-RAN includes one or more gNBs **206** (radio access nodes) configured to connect UEs **110** to the NG-RAN to thereby access the 5GC (at times referred to as the NGC). The term 'gNB' in 5G may correspond to the eNB in 4G LTE.

Some deployments of 4G LTE and 5G in particular are considered standalone (SA) deployments. Other deployments combine 4G LTE and 5G technologies, and are referred to as non-standalone (NSA) deployments. In some deployments, the E-UTRAN includes one or more ng-eNBs that are configured to communicate with the 5GC, and that may also be configured to communicate with one or more gNBs. Similarly, in another deployment, the NG-RAN may include one or more en-gNBs that are configured to communicate with the EPC, and that may also be configured to communicate with one or more eNBs. In various instances, a single UE **110,** a dual-mode or multimode UE, may support multiple (two or more) RANs-thereby being configured to connect to multiple RANs, such as 4G LTE and 5G.

In some deployments, operations of a gNB **206** or other radio access node may be distributed or functionally split into components including one or more remote radio head (RRHs) or radio units (RUs) **208,** and a baseband unit (BBU); and in some architectures, the BBU may be split into a distributed unit (DU) **210** and a central/centralized unit (CU) **212,** such as a server, host or node. In some architectures, the RRH/RU and DU may be co-located. It is also possible that node operations may be distributed among a plurality of servers, hosts or nodes. It should also be understood that the distribution of work between CN operations and radio access node operations may vary depending on implementation.

As shown and described, for example, some 5G deployments may be based on a so-called CU-DU split including one or more DUs **210** and a CU **212.** One gNB-CU (central node) may control one or more gNB-DUs. The gNB-CU may control a plurality of spatially separated gNB-DUs, acting at least as transmit/receive (Tx/Rx) nodes. In some example implementations, however, the gNB-DUs (also called DU) may include, for example, a radio link control (RLC), medium access control (MAC) layer and a physical (PHY) layer, whereas the gNB-CU (also called a CU) may include the layers above the RLC layer, such as a packet data convergence protocol (PDCP) layer, a radio resource control (RRC), and an internet protocol (IP) layer. Other functional splits are also possible. It is considered that a skilled person is familiar with the open systems interconnection (OSI) model and the functionalities within each layer.

In some example implementations, the server or CU **212** may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU **210,** and the boundary where the responsibility is shifted between the CU and the DU may be selected according to implementation.

Currently in 3GPP, mainstream mobility has been conducted using higher layer (L3 or RRC controlled) mobility. In this regard, L3 handover based mobility is a well-known and proven method for ensuring a robust way of handing over the UE **110** from one serving cell (source cell) of a radio access node **202** to a new serving cell (target cell) of the same or another radio access node. The method has been used at least since GSM and is still in use in 5G NR. It is expected that L3 mobility (legacy handover) will also be commonly used in the future.

L1/L2-triggered mobility, or lower-layer triggered mobility (LTM) moves the execution of the 'handover' from one cell to another from higher layers (L3), such as RRC, to lower layers. These lower layers may be either PHY (or L1) or MAC (or L2). LTM may reduce latency, overhead and interruption time when compared to L3 handover based mobility. In a CU-DU split architecture, LTM may support one or more of intra-DU mobility, intra-CU inter-DU mobility, or inter-CU inter-DU mobility.

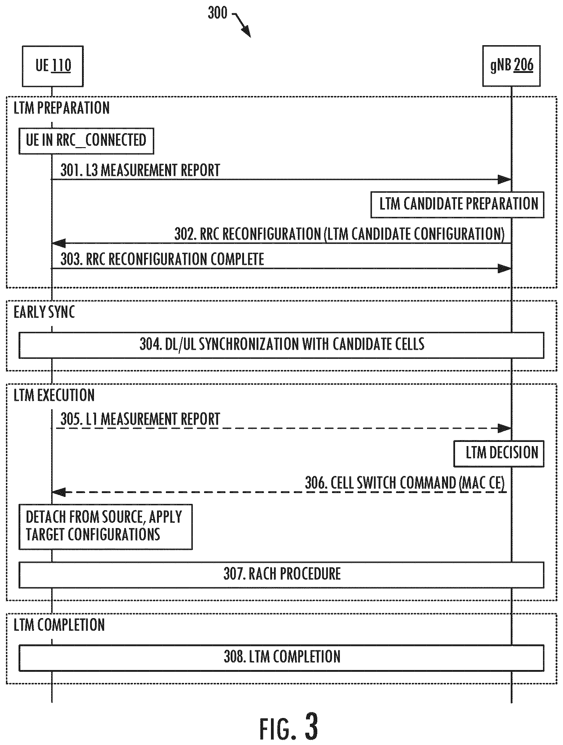

FIG. 3 illustrates a signaling chart **300** for an LTM procedure of a UE **110** in a RRC connected state with a gNB **206,** which has been proposed. During LTM preparation, as shown at step **301,** the UE sends a L3 measurement report to the gNB, which decides to use LTM and initiate LTM candidate preparation. The gNB at step **302** transmits a RRC reconfiguration message to the UE, including the configuration of one or more candidate target cells. The RRC reconfiguration message may also include a configuration of L1 measurement reporting for LTM execution. The UE stores the configurations, and the UE at step **303** transmits a RRC reconfiguration complete message to the gNB.

An early synchronization of the UE **110** with the candidate target cell(s) follows LTM preparation. As shown at step **304,** the UE **110** performs downlink (DL) / uplink (UL) synchronization with the candidate target cell(s). During this procedure, the UE may acquire a timing advance (TA) of respective ones of the candidate target cell(s). This early synchronization may reduce interruption during LTM execution, as compared to L3 handover based mobility. In this regard, the TA may be used to control the timing of uplink transmissions of a UE toward the candidate target cell(s). The UE may likewise have an acquired TA of the cell of the gNB to control the timing of uplink transmissions toward the gNB.

During LTM execution, the UE **110** performs L1 measurements on the configured candidate target cell(s), and the UE at step **305** transmits L1 measurement reports to the gNB **206.** The gNB decides to execute a cell switch, and selects one of the candidate target cell(s) as a target cell for the cell switch. The gNB then at step **306** transmits a cell switch command, such as a MAC control element (MAC-CE), to trigger cell switch. The UE switches to the configuration of the target cell; and if the TA of the target cell (from step **304**) is no longer available, the UE at step **307** initiates a random access channel (RACH) procedure with the target cell to acquire the TA of the target cell. The UE then at step **308** indicates successful completion of the cell switch.

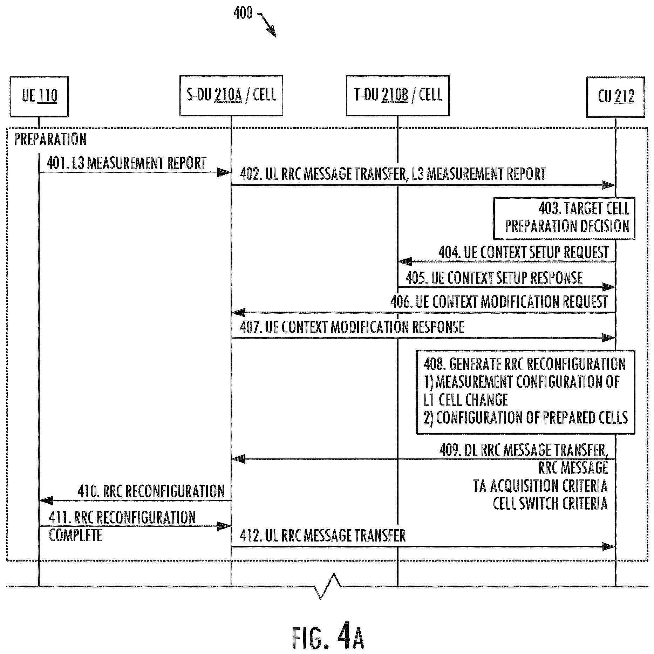

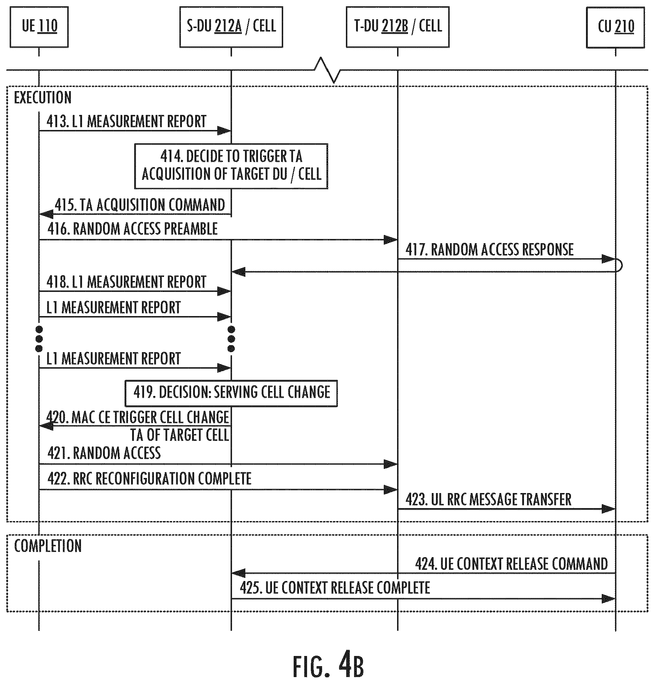

FIGS. 4A and 4B illustrate a signaling chart **400** for an LTM procedure in a CU-DU split architecture, including a CU **212,** a source DU (S-DU) **210A** for a serving cell, and a target DU (T-DU) **210B** for a target cell. During preparation for LTM, as shown at steps **401** and **402,** the UE **110** sends a L3 measurement report to the CU via the S-DU, and the CU at step **403** decides prepare one or more candidate target cells (DUs) for LTM. As shown at steps **404, 405, 406** and **407,** the CU proceeds with the UE context setup/modification procedures. At step **408,** the CU generates RRC reconfiguration(s) for the configured candidate target cell(s); and at steps **409** and **410,** the CU provides the configurations to the UE **110** via the S-DU.

At steps **408, 409** and **410,** the CU **212** also configures the UE **110** with L1 measurement reporting for LTM execution. The CU provides the S-DU **210A** with TA acquisition triggering criteria and configuration(s), as well as cell switch triggering criteria and configuration(s). The triggering criteria for TA acquisition and cell switch may be similar to measurement event report triggering conditions, e.g., A3, A4 or A5 event conditions or validity of acquired TA. The triggering conditions may include, for example, a filter configuration (for L1 measurements), trigger offsets, cell individual offsets, or the like.

At steps **411** and **412,** the UE **110** sends a RRC reconfiguration complete to the CU **212** via the S-DU **210A.**

During execution, at step **413** onwards, the UE **110** performs L1 measurements on the configured candidate target cell(s), and transmits L1 measurement reports to the S-DU **210A.** The S-DU at step **414** decides to trigger the TA acquisition of the candidate target cell(s) (including the cell of T-DU **210B**), and the S-DU at step **415** transmits a TA acquisition command to the UE. The UE at step **416** transmits a random access preamble to the candidate target cell(s) (T-DU **210B** / cell) to signal the candidate target cell(s) to estimate the TA between the UE and the candidate target cell(s). And at step **417,** the S-DU **210A** / cell receives a random access response (RAR) from respective ones of the candidate target cell(s) indirectly via the CU **212.** Alternatively, the UE may receive the RAR of respective ones of the candidate target cell(s), indirectly via the CU and the S-DU.

The UE **110** at step **418** transmits L1 beam measurements of the candidate target cell(s) to the S-DU **210A.** The S-DU at steps **419** and **420** decides to initiate a cell change to the T-DU **210B** / cell, and transmits a cell switch command (e.g., MAC-CE) to trigger the cell switch. In examples in which the RAR is received at the S-DU at step **417** (instead of the UE), the S-DU provides the TA of the T-DU / cell to the UE. If the TA of the T-DU / cell is still valid, the UE may skip the RACH procedure at step **421** when executing the cell switch. And at steps **422, 423, 424** and **425,** the UE, S-DU, T-DU and CU proceed with completion of the LTM procedure.

A number of enhancements are under discussion, including enhancements to LTM with event-triggered L1 measurement reporting. As described herein, the terms event-triggered, event-driven, event-based and the like may be used interchangeably. For example, agreement has been made on a number of LTM events based on beam specific quality of the serving cell and candidate cells as L1 measurement events. These LTM events include LTM-2 (beam of serving cell becomes worse than absolute threshold), LTM-3 (beam of candidate cell becomes amount of offset better than beam of serving cell), LTM-4 (beam of candidate cell becomes better than absolute threshold), and LTM-5 (beam of serving cell becomes worse than a first absolute threshold and beam of candidate cell becomes better than another, second absolute threshold).

The above agreed LTM events are based on the beam specific quality of a serving cell and candidate cell to trigger a measurement event. The beam specific quality may be indicated in a number of different manners, some of which may be based on a reference signal (RS), such as synchronization signal (SS) / physical broadcast channel (PBCH) block (SSB) or a channel state information reference signal (CSI-RS). For example, beam specific quality may be indicated by RS received power (RSRP), RS received quality (RSRQ), signal to interference plus noise ratio (SINR), or the like.

When the event is fulfilled, the UE **110** may be configured to indicate the event to the radio access node **202,** and typically report measurements to the radio access node on one or more RSs (e.g., SSB, CSI-RS) that fulfilled the event. In LTM-3, which may be referred to as relative threshold event, a beam of a serving cell is referred as the reference resource/beam. In LTM-4, which may be referred to as absolute threshold event, the beam of a candidate cell may be any of the candidate cell RSs that are configured for measurement.

Based on current agreement for LTM event-triggered L1 measurement reporting, the UE **110** may be configured to evaluate multiple RSs for one or more candidate cells. The LTM event evaluation may be done at the MAC layer of the UE, based on L1 measurements at the beam level. In some candidate cell deployments, this may result in the UE evaluating reporting event(s) for a high number of RSs, which may add complexity for implementations in which reporting event(s) (e.g., LTM-3/4/5) are evaluated for a candidate RS over a time duration, referred as a time-to-trigger (TTT).

As an example in the case of frequency range 2 (FR2), the maximum number of SSB per physical cell identifier (PCI) / cell may be 64, and the number of configured candidate cells may be up to 8, resulting in up to 512 RSs in a candidate RS configuration. In case of a CSI-RS based configuration, the maximum number may be much higher than the number of candidate SSBs configured in a candidate measurement RS set. As the event evaluation may be performed per beam, the UE may be required to maintain a respective timer per evaluated RS (e.g., to determine whether at least one reporting criterion for a reporting event remains satisfied for a duration of the respective timer). This may in turn lead to an increase in UE memory consumption / required processing power and overall power consumption.

Example implementations of the present disclosure therefore provide a solution to the above-referenced issue whereby the evaluation of reporting event(s) may be limited to L1 measurements of a maximum number and/or a minimum number of RSs.

According to some example implementations, a UE **110** may perform L1 measurements (e.g., RSRP, SINR) of RSs (e.g., SSB, CSI-RS) provided by beams of candidate cell(s) (e.g., T-DU **210B** / cell) and/or the serving cell (e.g., S-DU **210A** / cell) for a handover of the UE. The UE may perform an evaluation of reporting event(s) (e.g., LTM-3/4/5) for the RSs based on the L1 measurements, with the evaluation limited to the L1 measurements of a minimum number and/or a maximum number of the RSs. The UE may make a determination that a reporting event of the reporting event(s) is fulfilled based on the evaluation, and send a measurement report triggered by the determination to the serving cell. This measurement report may be a L1 measurement report as indicated at step **305** of FIG. 3 or step **418** of FIG. 4B.

In some examples, the evaluation may be performed at a MAC layer of the UE **110** based on L1 information provided to the MAC layer, such as the L1 measurements or an indication (e.g., from L1) that reporting criterion/criteria (at least one reporting criterion) for the reporting event(s) is determined to be satisfied based on the L1 measurements. In some further examples, the L1 information provided to the MAC layer may include an indication for a RS of a candidate cell (for LTM-3/4/5) or a serving cell (for LTM-2) whether or not the reporting criterion/criteria is satisfied. For the evaluation, timers (e.g., timerLTMEventEvaluation/Time to trigger, TTT, or the like) may be run for up to the maximum number of the RSs when reporting criterion/criteria for the reporting event(s) is determined to be satisfied based on the L1 measurements. The determination that the reporting event is fulfilled may then be made when the reporting criterion/criteria remains satisfied for the duration of a respective one of the timers. The timers in some implementations may operate in a manner similar to the above-referenced TTT.

As suggested above, in some examples, the reporting event may include reporting criterion/criteria and a timer (e.g., TTT). For each RS, the UE **110** (e.g., MAC layer) may start a timer for the RS when the reporting criterion/criteria is determined to be satisfied based on the L1 measurements of the RS. The UE may then perform an evaluation of the reporting criterion/criteria to determine whether the reporting criterion/criteria remains satisfied for a duration of the timer. And again, the determination that the reporting event is fulfilled may be made when the reporting criterion/criteria remains satisfied for the duration of the timer.

In one example, the reporting criteria may be, e.g., LTM-3 ( or corresponding UEIBM event) where the serving cell reference RS (e.g., RS associated with indicated TCI state, or other configured RS) is compared with one or more RS of a set of L1 measurement RS. L1 measurement RS may be e.g. associated with serving cell RS. L1 measurement RS may be e.g. associated with one or more candidate cell RS. In one example, if the TTT timer has been started (based on event criterion) for at least one RS, and the indicated TCI State ( or the reference RS used for event evaluation) changes, the TTT timer for event(s) that are associated with running/started TTT timer may be stopped. In other words, the event evaluation (for the candidate cell RS, or serving cell RS in beam management) may be stopped if the reference signal used as serving cell reference changes. In some examples, the event evaluation is performed by using event counters. In one example, the event evaluation counter (for the candidate cell RS, or serving cell RS in beam management) may be reset to initial value if the reference signal used as serving cell reference changes. As an example, a TTT timer may be (re)started for the evaluated L1 measurement RS based on the RS quality associated with the (new) indicated TCI state. In some examples, the TTT timer is not stopped if the indicated TCI state changes. In some examples, the TTT timer may be kept running if the indicated TCI state changes. In some examples, the event evaluation counter may not be reset if the indicated TCI state changes. In some examples, the event evaluation is continued when the indicated TCI state changes. The at least on RS associated with an indicated TCI state may refer to or used as serving beam/serving RS/current beam/RS/or serving cell reference RS for event evaluation.

In some examples, the minimum number and/or the maximum number of the RSs may be indicated by a capability of the UE **110** sent to the serving cell (e.g., S-DU **210A** / cell), or by a configuration of the UE received from the serving cell. In this regard, the UE may send (e.g., via RRC signaling) an indication of the capability of the UE to the serving cell that indicates the maximum number of the RSs for which the UE is able to perform the evaluation. Additionally or alternatively, the UE may receive (e.g., via RRC signaling) a configuration from the serving cell that indicates the minimum number and/or the maximum number of the RSs for which the evaluation is to be performed.

The maximum number of the RSs may be a measurement capability and/or an evaluation capability of the UE **110.** More particularly, for example, the maximum number may be a measurement capability of the UE for performing the L1 measurements. In another example, the maximum number may be an evaluation capability of the UE for the evaluation that is limited to the maximum number for which timers are maintained (started and running) by the UE for the evaluation. In some examples in which the UE indicates an event evaluation capability to the to the serving cell (e.g., S-DU **210A** / cell), the UE may receive a configuration for the (maximum) number of timers the UE is required to (concurrently) maintain. In some of these examples, the UE may be required to maintain (concurrently) up to the number of timers for evaluation of reporting event(s), but not more than the number of timers.

In another example, the maximum number of the reference signals may be an evaluation capability of the UE for the evaluation of the reporting event(s) that is limited to the maximum number of the reference signals for which reporting event counters are maintained by the UE for the evaluation.

The maximum number of the RSs may be indicated in a number of different manners. In some examples, the maximum number may be indicated per candidate cell (e.g., T-DU **210B** / cell) of the candidate cell(s), or across the candidate cell(s). The maximum number may be indicated per resource set (e.g., LTM-CSI-SSB-ResourceSet) of one or more resource sets for an event-triggered reporting configuration that specifies the reporting event(s), or across the resource set(s) for the event-triggered reporting configuration. The maximum number may be indicated per MAC entity (e.g., MAC layer for one cell group) of one or more MAC entities that perform the evaluation. And in yet another example, the maximum number may be indicated per event type (e.g., LTM-3, LTM-4) of the reporting event(s).

Again, in some examples, the reporting event may include reporting criterion/criteria and a timer, per RS, which may be started when the reporting criterion/criteria is determined to be satisfied based on the L1 measurements of the RS. In some of these examples, the maximum number of the RSs may correspond to a maximum number of timers for the evaluation of the maximum number of the RSs. When the reporting criterion/criteria is satisfied based on the L1 measurements of the RS, the UE **110** may determine a number of timers that are running for the evaluation of the reporting event(s) based on the L1 measurements of other of the RSs. The timer may be started for the RS when the number of timers that are running is less than the maximum number of timers; otherwise, the UE may not start a timer for the RS when the number of timers that are running is the maximum number of timers. For example, when the maximum number of timers is per candidate cell, then for a RS of a candidate cell for which the reporting criterion/criteria is satisfied, the UE may determine if the number of active timers configured for the cell provided by a beam of the candidate RS is less that the maximum number, the timer is started; otherwise, not.

In any of the examples, the event evaluation may be performed by counting instances of event occurrence (instead of or in addition to the timer). As an example, when the layer (e.g., MAC ) receives event instance indication (from lower layer such as L1) for an RS (e.g., LTM-3 event for a reference signal of candidate cell), an event is counted for the reference signal as part of the event evaluation. In some cases the reporting event may be triggered when certain (configured) number of events occur/is counted.

In any of the examples, the event evaluation referring to timer may be used interchangeably with event evaluation using counter/counting or timer and counter. The event evaluation maybe performed on RS basis i.e. the event evaluation determines whether the certain RS (of a candidate cell) fulfills the event criterion.

In any of the examples herein, the event evaluation may refer to beam management event evaluation. Beam management event evaluation may comprise of determining whether to report event associated with serving cell beam management / measurement reporting. Beam management may refer to reporting of L1 measurements based on event criteria such as at least one RS of serving cell is offset better than indicated beam (similar to LTM-3).

In some examples, for the evaluation, the UE **110** may count reporting event instances for up to the maximum number of the reference signals when at least one reporting criterion for the one or more reporting events is determined to be satisfied based on the L1 measurements. In some of these examples, the determination may be made that the reporting event is fulfilled when at least one or a configured number of the reporting event instances are counted.

According to some example implementations, the UE **110** may perform an evaluation of reporting event(s) for a maximum number of the RSs based on the L1 measurements, where respective RSs of the maximum number of the RSs are selected based on a relative priority among the reporting event(s), the L1 measurements, the beams, or the candidate cell(s) (e.g., T-DU **210B** / cell). For example, the respective RSs may be selected based on relative priority among the reporting event(s) in which the evaluation is an evaluation of at least one higher priority reporting event of the reporting event(s) for the maximum number of the RSs.

In some examples, the reporting events may have relative priority between each other with respect to the maximum number of timers the UE **110** is able to maintain (concurrently), or the maximum number RS for which the UE is able to evaluate (concurrently). Upon determining that maximum number is reached, UE may determine to select the timers to run based on the relative priority. In some of these examples, the first (highest) priority may be for reporting event(s) including the serving cell (e.g., S-DU **210A** / cell) and candidate cell(s) (e.g., T-DU **210B** / cell), such as LTM-3 and LTM-5 (where, e.g., LTM-3 may take priority over LTM-5). The second priority may be for reporting event(s) including only the candidate cell(s), such as LTM-4. The third priority may be for reporting event(s) including only the serving cell, such as LTM-2. The relative priority in various examples may be configured by the network (e.g. via RRC signaling) or set by 3GPP specification.

In another example, the respective RSs may be selected based on relative priority among the L1 measurements in which the L1 measurements of the respective RSs are higher quality L1 measurements among the L1 measurements of the RSs. In another example, the respective RSs may be selected based on relative priority among the beams in which the respective RSs are provided by beams associated with at least one active transmission configuration indicator (TCI) state. And in yet another example, the respective RSs may be selected based on relative priority among the candidate cell(s) in which the respective RSs are provided the beams of at least one of the candidate cell(s) for which an early TA acquisition is triggered or performed by the UE.

In some examples, the UE **110** may determine the reporting criterion/criteria for the reporting event(s) is satisfied for an RS above the maximum number. The UE may select this other RS over one of the respective RSs of the maximum number on the relative priority. The UE may stop one of the timers being run for the one of the respective RSs to stop the evaluation for the one of the respective signals, and start a timer for the other RS for evaluation of the reporting event(s) for the other RS. More particularly, for example, if the number of active timers has reached the maximum number of timers, and the measurement quality of a new RS for which the reporting criterion/criteria for a reporting event is satisfied is higher (or X dB above a configured or specified threshold) than one of the RSs for which a timer is currently running, the timer for the one of the RSs may be stopped, and a new timer may be started for the new RS.

The relative priority expressed in other manners may likewise be used in examples in which the number of active timers has reached the maximum number of timers, and the measurement quality of a new RS for which the reporting criterion/criteria for a reporting event is satisfied. In one of these examples, when new RS is associated with an active TCI state, and one of the RSs for which a timer is currently running is not associated with any active TCI state (if any), the timer for the one of the RSs may be stopped, and a new timer may be started for the new RS. In another of these examples, when the new RS is associated with an candidate cell or candidate cell RS for which TA acquisition is triggered (or performed by the UE), and one of the RSs for which a timer is currently running is not, the timer for the one of the RSs may be stopped, and a new timer may be started for the new RS. In some further examples, the UE **110** may count reporting event instances for which the criterion/criteria for the reporting event(s) is satisfied for the new RS. In yet another example, the UE **110** may make a determination that a timer is running for evaluation of reporting event(s) for a first RS and based on the L1 measurements, and that a timer for a second RS is to be started. Based on the determination, the UE may stop the timer, and start a new timer based on the measured RSRP level (if timers are determined not to be run concurrently).

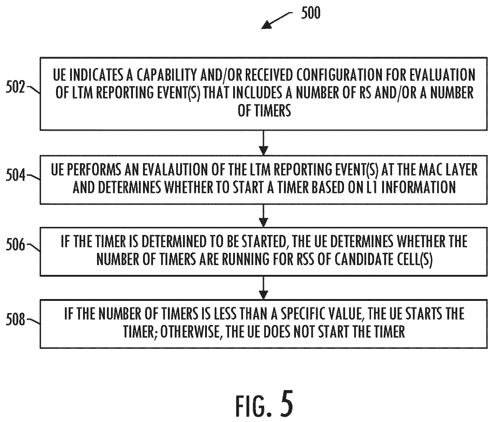

To further illustrate some example implementations of the present disclosure, FIG. 5 illustrates steps of a procedure **500** for evaluation of one or more L1 measurement reporting events. As shown at block **502,** a UE **110** indicates a capability and/or received configuration for evaluation of LTM reporting event(s) that includes a number of RS and/or a number of timers. The UE performs an evaluation of the LTM reporting event(s) at the MAC layer and determines whether to start a timer based on L1 information, as shown at block **504.** If the timer is determined to be started, the UE determines whether the number of timers are running for RSs of candidate cell(s), as shown at block **506.** And if the number of timers is less than a specific value, the UE starts the timer; otherwise, the UE does not start the timer, as shown at block **508.**

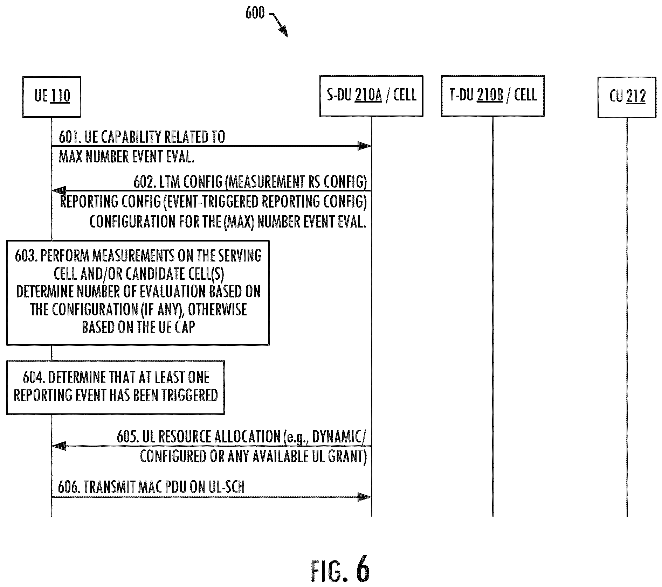

FIG. 6 illustrates a signaling chart **600** of a procedure event-based reporting of L1 measurements, according to some example implementations. In some examples, the procedure may be carried out during an LTM procedure, such as shown in FIG. 3 and/or FIG. 4. In this regard, the procedure may be carried out to determine when to send an L1 measurement report, and send the L1 measurement report, as indicated at step **305** of FIG. 3 or step **418** of FIG. 4B.

As shown in FIG. 6, the UE **110** may at step **601** send, to the serving cell (S-DU **210A** / cell), a UE capability related to a maximum number event evaluation, such as during LTM preparation. The serving cell may at step **602** send the UE measurement and reporting configurations for candidate cell(s) (e.g., T-DU **210B** / cell), such as in an RRC reconfiguration (e.g., at step **302, 410**). The serving cell may also include a configuration of a (maximum) number (e.g., maximum number of RSs, maximum number of timers) for the evaluation of reporting event(s).

The UE **110** may at step **603** perform L1 measurements on the serving cell (S-DU **210A** / cell) and/or candidate cell(s) (e.g., T-DU **210B** / cell). The UE may determine to evaluate reporting event(s) for a number of RS based on the configuration (received at step **602**), or based on UE capability if no configuration is received. The UE may at step **604** determine that a reporting event is fulfilled based on the evaluation. The serving cell at step **605** may provide the UE with a UL resource allocation, which the UE may at step **606** use to send a measurement report triggered by the determination at step **604.** Although shown after the UE determines that the reporting event has been triggered, the UL resource allocation may be provided to the UE at any time before the measurement report is sent to the serving cell.

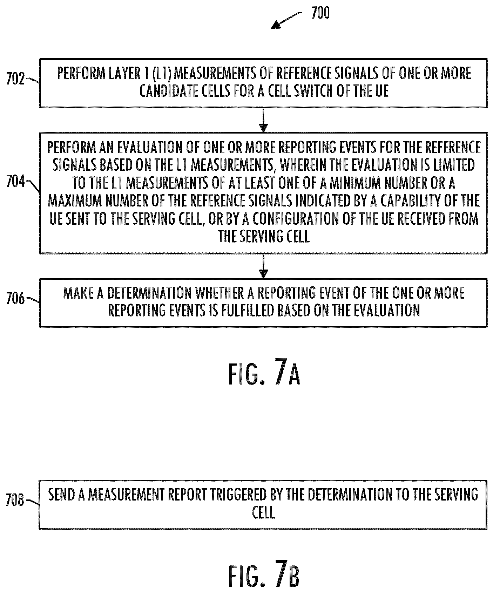

FIGS. 7A - 7E are flowcharts illustrating various steps in a method **700** performed by a user equipment (UE), according to various example implementations. The method includes performing layer 1 (L1) measurements of reference signals of one or more candidate cells for a cell switch of the UE, as shown at block **702** of FIG. 7A. The method includes performing an evaluation of one or more reporting events for the reference signals based on the L1 measurements, as shown at block **704.** The evaluation is limited to the L1 measurements of at least one of a minimum number or a maximum number of the reference signals indicated by a capability of the UE sent to the serving cell, or by a configuration of the UE received from the serving cell. And the method includes making a determination whether a reporting event of the one or more reporting events is fulfilled based on the evaluation, as shown at block **706.**

In some examples, the determination is that the reporting event is fulfilled, and the method **700** further includes sending a measurement report triggered by the determination to the serving cell, as shown at block **708** of FIG. 7B.

In some examples, performing the L1 measurements at block **702** includes performing the L1 measurements of the one or more candidate cells and the serving cell. In some of these examples, the evaluation is performed at block **704** based on the L1 measurements of the reference signals of the one or more candidate cells and the serving cell.

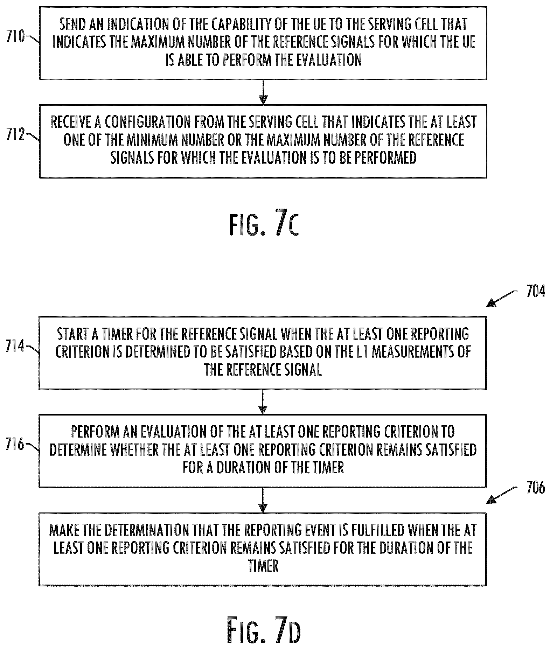

In some examples, the method **700** further includes at least one of sending an indication of the capability of the UE to the serving cell that indicates the maximum number of the reference signals for which the UE is able to perform the evaluation, as shown at block, or receiving a configuration from the serving cell that indicates the at least one of the minimum number or the maximum number of the reference signals for which the evaluation is to be performed, as shown at blocks **710** and **712** of FIG. 7C.

In some examples, the maximum number of the reference signals is a measurement capability of the UE for performing the L1 measurements of the reference signals up to the maximum number of the reference signals.

In some examples, the maximum number of the reference signals is an evaluation capability of the UE for the evaluation of the one or more reporting events that is limited to the maximum number of the reference signals for which timers are maintained by the UE for the evaluation.

In some examples, the maximum number of the reference signals is an evaluation capability of the UE for the evaluation of the one or more reporting events that is limited to the maximum number of the reference signals for which reporting event counters are maintained by the UE for the evaluation.

In some examples, the maximum number of the reference signals that is indicated is at least one of per candidate cell of the one or more candidate cells; across the one or more candidate cells; per resource set of one or more resource sets for an event-triggered reporting configuration that specifies the one or more reporting events; across the one or more resource sets for the event-triggered reporting configuration; per medium access control (MAC) entity of one or more MAC entities that perform the evaluation; or per event type of the one or more reporting events.

In some examples, the evaluation of the one or more reporting events is performed at block **704** at a medium access control (MAC) layer of the UE based on L1 information provided to the MAC layer. In some of these examples, the L1 information includes the L1 measurements or an indication that at least one reporting criterion for the one or more reporting events is determined to be satisfied based on the L1 measurements.

In some examples, performing the evaluation at block **704** comprises running timers for up to the maximum number of the reference signals when at least one reporting criterion for the one or more reporting events is determined to be satisfied based on the L1 measurements. In some of these examples, the determination that the reporting event is fulfilled is made at block **706** when the at least one reporting criterion remains satisfied for the duration of a respective one of the timers.

In some examples, the reporting event includes at least one reporting criterion and a timer, and performing the evaluation at block **704** comprises for each reference signal of the reference signals, starting a timer for the reference signal when the at least one reporting criterion is determined to be satisfied based on the L1 measurements of the reference signal, as shown at block **714** of FIG. 7D. In some of these examples, performing the evaluation also includes performing an evaluation of the at least one reporting criterion to determine whether the at least one reporting criterion remains satisfied for a duration of the timer, as shown at block **716.** Also in some of these examples, the determination that the reporting event is fulfilled is made at block **706** when the at least one reporting criterion remains satisfied for the duration of the timer.

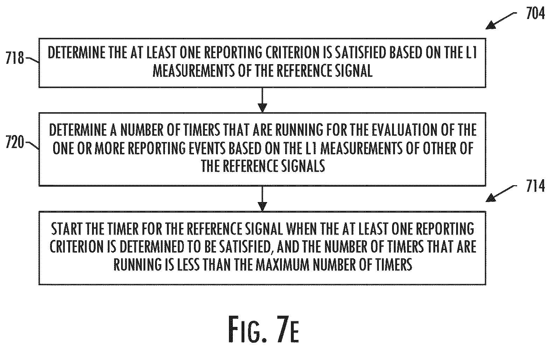

In some examples, the maximum number of the reference signals corresponds to a maximum number of timers for the evaluation of the maximum number of the reference signals. In some of these examples, performing the evaluation at block **704** further comprises determining the at least one reporting criterion is satisfied based on the L1 measurements of the reference signal, as shown at block **718** of FIG. 7E. Also in some of these examples, performing the valuation further comprises determining a number of timers that are running for the evaluation of the one or more reporting events based on the L1 measurements of other of the reference signals, as shown at block **720.** And the timer is started at block **714** for the reference signal when the at least one reporting criterion is determined to be satisfied, and the number of timers that are running is less than the maximum number of timers.

In some examples, performing the evaluation at block **704** comprises counting reporting event instances for up to the maximum number of the reference signals when at least one reporting criterion for the one or more reporting events is determined to be satisfied based on the L1 measurements. In some of these examples, the determination is made at block **706** that the reporting event is fulfilled when at least one or a configured number of the reporting event instances are counted.

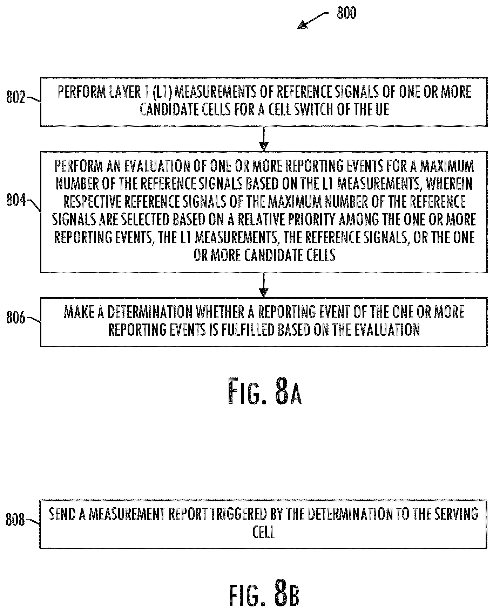

FIGS. 8A - 8D are flowcharts illustrating various steps in a method **800** performed by a user equipment (UE), according to various example implementations. The method includes performing layer 1 (L1) measurements of reference signals of one or more candidate cells for a cell switch of the UE, as shown at block **802** of FIG. 8A. The method includes performing an evaluation of one or more reporting events for a maximum number of the reference signals based on the L1 measurements, as shown at block **804.** Respective reference signals of the maximum number of the reference signals are selected based on a relative priority among the one or more reporting events, the L1 measurements, the reference signals, or the one or more candidate cells. And the method includes making a determination whether a reporting event of the one or more reporting events is fulfilled based on the evaluation, as shown at block **806.**

In some examples, the determination is that the reporting event is fulfilled, and the method further includes sending a measurement report triggered by the determination to the serving cell, as shown at block **808** of FIG. 8B.

In some examples, the evaluation is limited to the maximum number of the reference signals indicated by a capability of the UE sent to the serving cell, or by a configuration of the UE received from the serving cell.

In some examples, performing the L1 measurements at block **802** includes performing the L1 measurements of the one or more candidate cells and the serving cell. In some of these examples, the evaluation is performed at block **804** based on the L1 measurements of the reference signals of the one or more candidate cells and the serving cell.

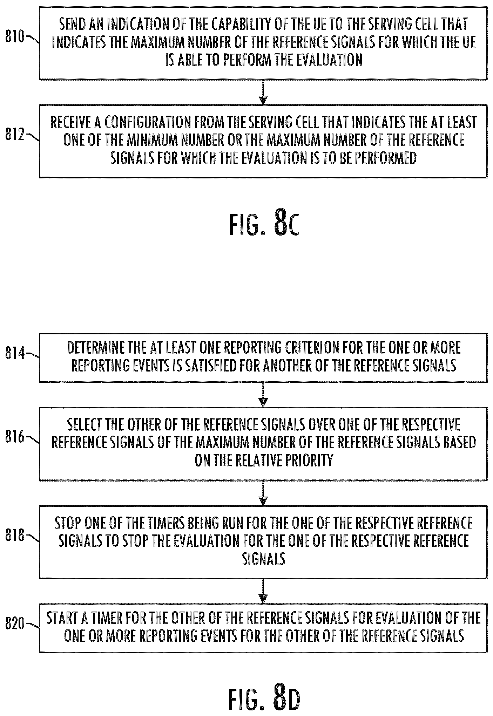

In some examples, the method **800** further includes at least one of sending an indication of the capability of the UE to the serving cell that indicates the maximum number of the reference signals for which the UE is able to perform the evaluation, or receiving a configuration from the serving cell that indicates the at least one of the minimum number or the maximum number of the reference signals for which the evaluation is to be performed, as shown at blocks **810** and **812** of FIG. 8C.

In some examples, the respective reference signals are selected based on relative priority among the one or more reporting events in which the evaluation is an evaluation of at least one higher priority reporting event of the one or more reporting events for the maximum number of the reference signals.

In some examples, the respective reference signals are selected based on relative priority among the L1 measurements in which the L1 measurements of the respective reference signals are higher quality L1 measurements among the L1 measurements of the reference signals.

In some examples, the respective reference signals are selected based on relative priority among the reference signals in which the respective reference signals are associated with at least one active transmission configuration indicator (TCI) state.

In some examples, the respective reference signals are selected based on relative priority among the one or more candidate cells in which the respective reference signals of at least one of the one or more candidate cells for which an early timing advance acquisition is triggered or performed by the UE.

In some examples, performing the evaluation at block **804** comprises running timers for the respective reference signals when at least one reporting criterion for the one or more reporting events is determined to be satisfied based on the L1 measurements. In some of these examples, the determination that the reporting event is fulfilled is made at block **806** when the at least one reporting criterion remains satisfied for the duration of a respective one of the timers.

In some examples, the method **800** further includes determining the at least one reporting criterion for the one or more reporting events is satisfied for another of the reference signals, as shown at block **814** of FIG. 8D. In some of these examples, the method includes selecting the other of the reference signals over one of the respective reference signals of the maximum number of the reference signals based on the relative priority, as shown at block **816.** The method includes stopping one of the timers being run for the one of the respective reference signals to stop the evaluation for the one of the respective reference signals, as shown at block **818.** And the method includes starting a timer for the other of the reference signals for evaluation of the one or more reporting events for the other of the reference signals, as shown at block **820.**

In some examples, the method **800** further includes counting reporting event instances for which the at least one reporting criterion for the one or more reporting events is satisfied for the other of the reference signals.

According to example implementations of the present disclosure, a telecommunications system **100** or PLMN **102,** and its components such as a UE **110,** gNB **206,** CU **208,** DU **210,** S-DU **210A** and/or T-DU **210B,** may be implemented by various means. Means for implementing the system and its components may include hardware, firmware, software, or combinations thereof. In some examples, one or more apparatuses may be configured to function as or otherwise implement the system and its components shown and described herein. In examples involving more than one apparatus, the respective apparatuses may be connected to or otherwise in communication with one another in a number of different manners, such as directly or indirectly via a wired or wireless network or the like.

According to some example implementations, at least some of the method **700** described with respect to FIGS. 7A-7E may be carried out by an apparatus comprising means for performing functions corresponding steps of the method. Similarly, at least some of the method **800** described with respect to FIGS. 8A-8D may be carried out by an apparatus comprising means for performing functions corresponding steps of the method. Examples of a suitable apparatus may a user equipment, user device, user terminal or the like.

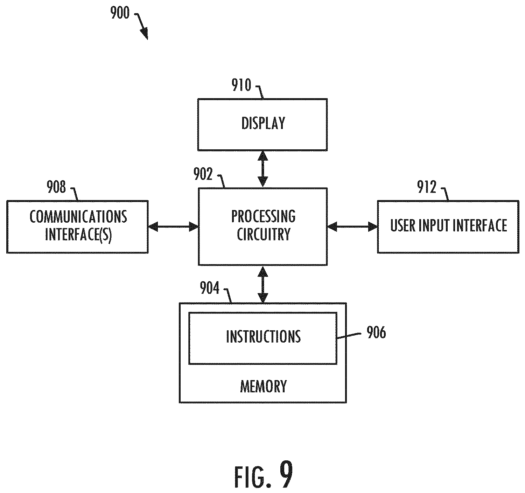

FIG. 9 illustrates an apparatus **900** in which means for performing various functions includes hardware, alone or under direction of one or more computer programs from a computer-readable storage medium or other memory, such as computer memory, according to some example implementations of the present disclosure. Generally, an apparatus of example implementations of the present disclosure may comprise, include or be embodied in one or more fixed or portable electronic devices. Examples of suitable electronic devices include a wearable computer, mobile phone, portable computer, desktop computer, workstation computer, server (server computer) or the like. The apparatus may include one or more of each of a number of components such as, for example, processing circuitry **902** connected to computer-readable storage medium or other memory **904.**

The processing circuitry **902** may be composed of one or more processors alone or in combination with one or more computer-readable storage media. The processing circuitry is generally any piece of computer hardware that is capable of processing information such as, for example, data, computer programs and/or other suitable electronic information. The processing circuitry is composed of a collection of electronic circuits some of which may be packaged as an integrated circuit or multiple interconnected integrated circuits (an integrated circuit at times more commonly referred to as a "chip"). The processing circuitry may be configured to execute computer programs, which may be stored onboard the processing circuitry or otherwise stored in the memory 904 (of the same or another apparatus).

The processing circuitry 902 may be a number of processors, a multi-core processor or some other type of processor, depending on the particular implementation. Further, the processing circuitry may be implemented using a number of heterogeneous processor systems in which a main processor is present with one or more secondary processors on a single chip. As another illustrative example, the processing circuitry may be a symmetric multi-processor system containing multiple processors of the same type. In yet another example, the processing circuitry may be embodied as or otherwise include one or more ASICs, FPGAs or the like. Thus, although the processing circuitry may be capable of executing a computer program to perform one or more functions, the processing circuitry of various examples may be capable of performing one or more functions without the aid of a computer program. In either instance, the processing circuitry may be appropriately programmed to perform functions or operations according to example implementations of the present disclosure.

The memory 904 is generally any piece of computer hardware that is capable of storing information such as, for example, data, computer programs, instructions 906 (e.g., computer-readable program code) and/or other suitable information either on a temporary basis and/or a permanent basis. The memory may include volatile and/or nonvolatile memory, and may be fixed or removable. Examples of suitable memory include recording media, random access memory (RAM), read-only memory (ROM), a hard drive, a flash memory, a thumb drive, a removable computer diskette, an optical disk or some combination thereof.

The memory 904 is a non-transitory device capable of storing information. One example of a suitable memory is a computer-readable storage medium, which is distinguishable from a computer-readable transmission medium capable of carrying information from one location to another. Examples of suitable computer-readable transmission media comprise electronic carrier signals, telecommunications signals, or some combination thereof. As used herein, the term "non-transitory" is a limitation of the medium itself (i.e., tangible, not a signal) as opposed to a limitation on data storage persistency (e.g., RAM versus ROM). A computer-readable medium as described herein generally refers to a computer-readable storage medium or computer-readable transmission medium. A computer-readable medium is any entity or device capable in which information, such as one or more computer programs or portions thereof, may be stored and carried.

In addition to the memory 904 (e.g., computer-readable storage medium), the processing circuitry 902 may also be connected to one or more interfaces for displaying, transmitting and/or receiving information. The interfaces may include a communications interface 908 and/or one or more user interfaces. The communications interface may be configured to transmit and/or receive information, such as to and/or from other apparatus(es), network(s) or the like. The communications interface may be configured to transmit and/or receive information by physical (wired) and/or wireless communications links. Examples of suitable communication interfaces include a network interface controller (NIC), wireless NIC (WNIC) or the like.

The user interfaces may include a display 910 and/or one or more user input interfaces 912. The display may be configured to present or otherwise display information to a user, suitable examples of which include a liquid crystal display (LCD), light-emitting diode (LED) display, organic LED (OLED) display, active-matrix OLED (AMOLED) or the like. The user input interfaces may be wired or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

Execution of the instructions 906 by the processing circuitry 902, or storage of the instructions in the memory 904, supports combinations of operations for implementing example implementations of the present disclosure. In this manner, an apparatus 900 may comprise at least one processing circuitry and at least one memory coupled to the at least one processing circuitry, where the at least one processing circuitry is configured to execute instructions stored in the at least one memory. It will also be understood that one or more functions, and combinations of functions, may be implemented by special purpose hardware-based computer systems and/or processing circuitry which perform the specified functions, or combinations of special purpose hardware and program code instructions.

Some example implementations of the present disclosure may also be carried out in the form of a computer process defined by one or more computer programs or portions thereof. Example implementations of the present disclosure may be carried out by executing at least one portion of a computer program comprising instructions. The computer program may be in source code form, object code form, or in some intermediate form. The computer program may be stored in a computer-readable medium that is readable by a computer, processing circuitry or other suitable apparatus. As indicated above, for example, the computer program may be stored in a memory, such as a computer-readable storage medium. Additionally or alternatively, for example, the computer program may be stored in a computer-readable transmission medium. The coding of software for carrying out example implementations of the present disclosure is well within the scope of a person of ordinary skill in the art.

As will be appreciated, any suitable instructions may be loaded onto a computer, a processing circuitry or other programmable apparatus from a memory or a computer-readable medium (e.g., computer-readable storage medium, computer-readable transmission medium) to produce a particular machine, such that the particular machine becomes a means for implementing the functions specified herein. The instructions may also be stored in a computer-readable medium that can direct a computer, a processing circuitry or other programmable apparatus to function in a particular manner to thereby generate a particular machine or particular article of manufacture. In some examples, the instructions stored in the computer-readable medium may produce an article of manufacture, where the article of manufacture becomes a means for implementing functions described herein. The instructions may be retrieved from a computer-readable medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of instructions comprising program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

As explained above and reiterated below, the present disclosure includes, without limitation, the following example implementations.

Clause 1. A method performed by a user equipment (UE), the method comprising: performing layer 1 (L1) measurements of reference signals of one or more candidate cells for a cell switch of the UE; performing an evaluation of one or more reporting events for the reference signals based on the L1 measurements, wherein the evaluation is limited to the L1 measurements of at least one of a minimum number or a maximum number of the reference signals indicated by a capability of the UE sent to the serving cell, or by a configuration of the UE received from the serving cell; and making a determination whether a reporting event of the one or more reporting events is fulfilled based on the evaluation.

Clause 2. The method of clause 1, wherein the determination is that the reporting event is fulfilled, and the method further comprises sending a measurement report triggered by the determination to the serving cell.

Clause 3. The method of clause 1 or clause 2, wherein performing the L1 measurements includes performing the L1 measurements of the one or more candidate cells and the serving cell, and wherein the evaluation is performed based on the L1 measurements of the reference signals of the one or more candidate cells and the serving cell.

Clause 4. The method of any of clauses 1 to 3, wherein the method further comprises at least one of: sending an indication of the capability of the UE to the serving cell that indicates the maximum number of the reference signals for which the UE is able to perform the evaluation; or receiving a configuration from the serving cell that indicates the at least one of the minimum number or the maximum number of the reference signals for which the evaluation is to be performed.

Clause 5. The method of any of clauses 1 to 4, wherein the maximum number of the reference signals is a measurement capability of the UE for performing the L1 measurements of the reference signals up to the maximum number of the reference signals.

Clause 6. The method of any of clauses 1 to 5, wherein the maximum number of the reference signals is an evaluation capability of the UE for the evaluation of the one or more reporting events that is limited to the maximum number of the reference signals for which timers are maintained by the UE for the evaluation.

Clause 7. The method of any of clauses 1 to 6, wherein the maximum number of the reference signals is an evaluation capability of the UE for the evaluation of the one or more reporting events that is limited to the maximum number of the reference signals for which reporting event counters are maintained by the UE for the evaluation.

Clause 8. The method of any of clauses 1 to 7, wherein the maximum number of the reference signals that is indicated is at least one of: per candidate cell of the one or more candidate cells; across the one or more candidate cells; per resource set of one or more resource sets for an event-triggered reporting configuration that specifies the one or more reporting events; across the one or more resource sets for the event-triggered reporting configuration; per medium access control (MAC) entity of one or more MAC entities that perform the evaluation; or per event type of the one or more reporting events.

Clause 9. The method of any of clauses 1 to 8, wherein the evaluation of the one or more reporting events is performed at a medium access control (MAC) layer of the UE based on L1 information provided to the MAC layer, and the L1 information includes the L1 measurements or an indication that at least one reporting criterion for the one or more reporting events is determined to be satisfied based on the L1 measurements.

Clause 10. The method of any of clauses 1 to 9, wherein performing the evaluation comprises running timers for up to the maximum number of the reference signals when at least one reporting criterion for the one or more reporting events is determined to be satisfied based on the L1 measurements, and wherein the determination that the reporting event is fulfilled is made when the at least one reporting criterion remains satisfied for the duration of a respective one of the timers.

Clause 11. The method of any of clauses 1 to 10, wherein the reporting event includes at least one reporting criterion and a timer, and performing the evaluation comprises for each reference signal of the reference signals: starting a timer for the reference signal when the at least one reporting criterion is determined to be satisfied based on the L1 measurements of the reference signal; and performing an evaluation of the at least one reporting criterion to determine whether the at least one reporting criterion remains satisfied for a duration of the timer, and wherein the determination that the reporting event is fulfilled is made when the at least one reporting criterion remains satisfied for the duration of the timer.

Clause 12. The method of clause 11, wherein the maximum number of the reference signals corresponds to a maximum number of timers for the evaluation of the maximum number of the reference signals, and performing the evaluation further comprises: determining the at least one reporting criterion is satisfied based on the L1 measurements of the reference signal; and determining a number of timers that are running for the evaluation of the one or more reporting events based on the L1 measurements of other of the reference signals, and wherein the timer is started for the reference signal when the at least one reporting criterion is determined to be satisfied, and the number of timers that are running is less than the maximum number of timers.

Clause 13. The method of any of clauses 1 to 12, wherein performing the evaluation comprises counting reporting event instances for up to the maximum number of the reference signals when at least one reporting criterion for the one or more reporting events is determined to be satisfied based on the L1 measurements, and wherein the determination is made that the reporting event is fulfilled when at least one or a configured number of the reporting event instances are counted.

Clause 14. An apparatus comprising: at least one memory configured to store instructions; and at least one processing circuitry configured to access the at least one memory, and execute the instructions to cause the apparatus to perform the method of any of clauses 1 to 13.

Clause 15. An apparatus comprising means for performing the method of any of clauses 1 to 13.

Clause 16. A computer-readable medium comprising instructions that, in response to execution by at least one processing circuitry, causes an apparatus to perform the method of any of clauses 1 to 13.

Clause 17. A computer-readable storage medium comprising instructions that, in response to execution by at least one processing circuitry, causes an apparatus to perform the method of any of clauses 1 to 13.

Clause 18. A computer program comprising instructions that, in response to execution by at least one processing circuitry, causes an apparatus to perform the method of any of clauses 1 to 13.

Clause 19. A method performed by a user equipment (UE), the method comprising: performing layer 1 (L1) measurements of reference signals of one or more candidate cells for a cell switch of the UE; performing an evaluation of one or more reporting events for a maximum number of the reference signals based on the L1 measurements, wherein respective reference signals of the maximum number of the reference signals are selected based on a relative priority among the one or more reporting events, the L1 measurements, the reference signals, or the one or more candidate cells; and making a determination whether a reporting event of the one or more reporting events is fulfilled based on the evaluation.

Clause 20. The method of clause 19, wherein the determination is that the reporting event is fulfilled, and the method further comprises sending a measurement report triggered by the determination to the serving cell.

Clause 21. The method of clause 19 or clause 20, wherein the evaluation is limited to the maximum number of the reference signals indicated by a capability of the UE sent to the serving cell, or by a configuration of the UE received from the serving cell.

Clause 22. The method of any of clauses 19 to 21, wherein performing the L1 measurements includes performing the L1 measurements of the one or more candidate cells and the serving cell, and wherein the evaluation is performed based on the L1 measurements of the reference signals of the one or more candidate cells and the serving cell.

Clause 23. The method of any of clauses 19 to 22, wherein the method further comprises at least one of: sending an indication of the capability of the UE to the serving cell that indicates the maximum number of the reference signals for which the UE is able to perform the evaluation; or receiving a configuration from the serving cell that indicates the at least one of the minimum number or the maximum number of the reference signals for which the evaluation is to be performed.

Clause 24. The method of any of clauses 19 to 23, wherein the respective reference signals are selected based on relative priority among the one or more reporting events in which the evaluation is an evaluation of at least one higher priority reporting event of the one or more reporting events for the maximum number of the reference signals.

Clause 25. The method of any of clauses 19 to 24, wherein the respective reference signals are selected based on relative priority among the L1 measurements in which the L1 measurements of the respective reference signals are higher quality L1 measurements among the L1 measurements of the reference signals.

Clause 26. The method of any of clauses 19 to 25, wherein the respective reference signals are selected based on relative priority among the reference signals in which the respective reference signals are associated with at least one active transmission configuration indicator (TCI) state.

Clause 27. The method of any of clauses 19 to 26, wherein the respective reference signals are selected based on relative priority among the one or more candidate cells in which the respective reference signals of at least one of the one or more candidate cells for which an early timing advance acquisition is triggered or performed by the UE.

Clause 28. The method of any of clauses 19 to 27, wherein performing the evaluation comprises running timers for the respective reference signals when at least one reporting criterion for the one or more reporting events is determined to be satisfied based on the L1 measurements, and wherein the determination that the reporting event is fulfilled is made when the at least one reporting criterion remains satisfied for the duration of a respective one of the timers.

Clause 29. The method of clause 28, wherein the method further comprises: determining the at least one reporting criterion for the one or more reporting events is satisfied for another of the reference signals; selecting the other of the reference signals over one of the respective reference signals of the maximum number of the reference signals based on the relative priority; stopping one of the timers being run for the one of the respective reference signals to stop the evaluation for the one of the respective reference signals; and starting a timer for the other of the reference signals for evaluation of the one or more reporting events for the other of the reference signals.

Clause 30. The method of clause 29, wherein the method further comprises counting reporting event instances for which the at least one reporting criterion for the one or more reporting events is satisfied for the other of the reference signals.

Clause 31. An apparatus comprising: at least one memory configured to store instructions; and at least one processing circuitry configured to access the at least one memory, and execute the instructions to cause the apparatus to perform the method of any of clauses 19 to 30.

Clause 32. An apparatus comprising means for performing the method of any of clauses 19 to 30.

Clause 33. A computer-readable medium comprising instructions that, in response to execution by at least one processing circuitry, causes an apparatus to perform the method of any of clauses 19 to 30.

Clause 34. A computer-readable storage medium comprising instructions that, in response to execution by at least one processing circuitry, causes an apparatus to perform the method of any of clauses 19 to 30.

Clause 35. A computer program comprising instructions that, in response to execution by at least one processing circuitry, causes an apparatus to perform the method of any of clauses 19 to 30.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus (110, 900) comprising:
at least one memory (904) configured to store instructions (906); and
at least one processing circuitry (902) configured to access the at least one memory (904), and execute the instructions to cause the apparatus (100, 910) to at least:
perform layer 1 (L1) measurements of reference signals of one or more candidate cells for a cell switch of a user equipment, UE (110);
perform an evaluation of one or more reporting events for a maximum number of the reference signals based on the L1 measurements, wherein respective reference signals of the maximum number of the reference signals are selected based on a relative priority among the one or more reporting events, the L1 measurements, the reference signals, or the one or more candidate cells; and
make a determination whether a reporting event of the one or more reporting events is fulfilled based on the evaluation.

2. The apparatus (110, 900) of claim 1, wherein the determination is that the reporting event is fulfilled, and the at least one processing circuitry is configured to execute the instructions to cause the apparatus to further send a measurement report triggered by the determination to the serving cell.

3. The apparatus (110, 900) of claim 1 or 2, wherein the evaluation is limited to the maximum number of the reference signals indicated by a capability of the UE sent to the serving cell, or by a configuration of the UE received from the serving cell.

4. The apparatus (110, 900) of any preceding claim, wherein the apparatus caused to perform the L1 measurements includes the apparatus caused to perform the L1 measurements of the one or more candidate cells and the serving cell, and
wherein the evaluation is performed based on the L1 measurements of the reference signals of the one or more candidate cells and the serving cell.

5. The apparatus (110, 900) of any preceding claim, wherein the at least one processing circuitry (902) is configured to execute the instructions to cause the apparatus to further at least one of:
send an indication of the capability of the UE to the serving cell that indicates the maximum number of the reference signals for which the UE is able to perform the evaluation; or
receive a configuration from the serving cell that indicates the at least one of the minimum number or the maximum number of the reference signals for which the evaluation is to be performed.

6. The apparatus (110, 900) of any preceding claim, wherein the respective reference signals are selected based on relative priority among the one or more reporting events in which the evaluation is an evaluation of at least one higher priority reporting event of the one or more reporting events for the maximum number of the reference signals.

7. The apparatus (110, 900) of any preceding claim, wherein the respective reference signals are selected based on relative priority among the L1 measurements in which the L1 measurements of the respective reference signals are higher quality L1 measurements among the L1 measurements of the reference signals.

8. The apparatus (110, 900) of any preceding claim, wherein the respective reference signals are selected based on relative priority among the reference signals in which the respective reference signals are associated with at least one active transmission configuration indicator (TCI) state.

9. The apparatus (110, 900) of any preceding claim, wherein the respective reference signals are selected based on relative priority among the one or more candidate cells in which the respective reference signals of at least one of the one or more candidate cells for which an early timing advance acquisition is triggered or performed by the UE.

10. The apparatus (110, 900) of any preceding claim, wherein the apparatus caused to perform the evaluation includes the apparatus caused to run timers for the respective reference signals when at least one reporting criterion for the one or more reporting events is determined to be satisfied based on the L1 measurements, and
wherein the determination that the reporting event is fulfilled is made when the at least one reporting criterion remains satisfied for the duration of a respective one of the timers.

11. The apparatus (110, 900) of claim 10, wherein the at least one processing circuitry is configured to execute the instructions to cause the apparatus to further at least:
determine the at least one reporting criterion for the one or more reporting events is satisfied for another of the reference signals;
select the other of the reference signals over one of the respective reference signals of the maximum number of the reference signals based on the relative priority;
stop one of the timers being run for the one of the respective reference signals to stop the evaluation for the one of the respective reference signals; and
start a timer for the other of the reference signals for evaluation of the one or more reporting events for the other of the reference signals.

12. The apparatus (110, 900) of claim 11, wherein the at least one processing circuitry is configured to execute the instructions to cause the apparatus to further count reporting event instances for which the at least one reporting criterion for the one or more reporting events is satisfied for the other of the reference signals.

13. A method performed by a user equipment UE (110, 900), the method comprising:
performing (702) layer 1 (L1) measurements of reference signals of one or more candidate cells for a cell switch of the UE (110, 900);
performing (704) an evaluation of one or more reporting events for a maximum number of the reference signals based on the L1 measurements, wherein respective reference signals of the maximum number of the reference signals are selected based on a relative priority among the one or more reporting events, the L1 measurements, the reference signals, or the one or more candidate cells; and
making (706) a determination whether a reporting event of the one or more reporting events is fulfilled based on the evaluation.

14. The method of claim 13, wherein the determination is that the reporting event is fulfilled, and the method further comprises sending (708) a measurement report triggered by the determination to the serving cell.

15. The method of claim 13 or 14, wherein the evaluation is limited to the maximum number of the reference signals indicated by a capability of the UE sent to the serving cell, or by a configuration of the UE received from the serving cell.
